# EUROPEAN PATENT SPECIFICATION

(11) **EP 1 060 813 B1**
(45) Date of publication and mention of the grant of the patent: **13.10.2004**
(21) Application number: 00304371.8
(22) Date of filing: 24.05.2000
(51) Int. Cl.: B21J 15/32, B23P 19/00, B65G 47/08

(54) **Method for feeding fastening elements**
Verfahren zum Zuführen von Befestigungselementen
Procédé d'alimentation d'éléments de fixation

(30) Priority: 14.06.1999 DE 19926947
(43) Date of publication of application: 20.12.2000
(73) Proprietor: Newfrey LLC, Newark, Delaware 19711 (US)
(72) Inventor: Roessler, Andreas, 35463 Fernwald (DE)
(74) Representative: Haar, Lucas H., Dipl.-Ing.

(56) References cited:
- DE-A- 3 009 667
- DE-A- 3 222 557

## Description

The invention relates to a method for feeding fastening elements.

In the course of rising automation in manufacture, devices have been developed by which fastening elements are automatically brought into connection with at least one structure. By the name fastening element is understood fastening elements which are designed preferably asymmetrically with respect to a central plane. These can be, for example, rivets, screws, nails or similar.

From DE 44 23 165 C2 a method and a device for feeding fastening elements are known. Each fastening element is introduced via a feed device against the drive-in direction of a ram into a holder.

From WO 95/28242 a device is known, in which each fastening element is supplied by a feed channel, which runs substantially transversely to the direction of movement of the ram.

For the fastening device both according to DE 44 23 165 and according to WO 95/28242, feed devices are necessary, by which each fastening element is transported to the fastening device at a given orientation by the feed channel. This means that different feed devices are necessary for each fastening device.

From DE-A1 30 09 667 it is also known a method for feeding fastening elements with a first and second end, in which fastening elements one by one are transported through a feed channel to a junction point in one of two possible orientations. By impinging the fastening element at the junction point from opposite sides with pressurized air it is caused to leave the junction point with the first end in front via one of two opposite ends of a split discharge channel. Based on this, the object of the present invention is to present a method for feeding fastening elements, by means of which insertion of different fastening devices is enabled.

This object is achieved according to the invention by a method with the features of claim 1. Advantageous developments and configurations of the method according to the invention are the subject of the respective dependent claims.

For feeding fastening elements with a first and a second end, in particular rivets, preferably blind rivets, to a fastening device, it is proposed in the method according to the invention that at least one fastening element is transported at a given orientation to a junction point by a feed channel, the junction point having a first channel and a second channel opposite it. Depending on whether the at least one fastening element is to be transported with its first end or with its second end at the front, the first or the second channel is impinged with a pressure medium, in particular compressed air, and the fastening element leaves the junction point with the first end in front via a first channel or with the second end in front via a second channel.

By using this method according to the invention, fastening devices can be equipped with fastening elements which require a feed of fastening elements with differing orientations.

By using this method it is also concluded that a device is necessary for feeding fastening elements which operates by the method according to the invention.

According to an advantageous development of the method, it is proposed that the fastening elements are transported singly to the junction point. This enables the process to run without interruption.

According to yet another advantageous development of the method, it is proposed that, following on from one fastening element, a further fastening element is supplied to the junction point when the previous fastening element has left the junction point. This enables selective feed of fastening elements to the fastening devices.

According to yet another advantageous development of the method, it is proposed that the fastening elements are brought from the feed channel to the junction point in a connecting channel. In particular it is proposed that the fastening elements slide into the junction point on a portion of the connecting channel adjacent to the junction point. This has the advantage that the fastening elements arrive in the junction point automatically.

To prevent the fastening elements situated in the connecting channel and/or in the feed channel from being pushed out of these when the junction point is impinged with a pressure medium, it is proposed, according to yet another advantageous development of the method, that at least the feed channel is closed off at least during the pressure impingement.

The feed of fastening elements to the junction point is effected preferably by means of a movable ram.

Preferably the ram is movable between two end positions. In particular it is proposed that in a first end position it opens the feed channel, so the ram can take hold of a fastening element. In a second end position the ram preferably has a sealing effect, so at least the feed channel is closed off and sealed.

Not part of the invention, a device for feeding fastening elements with a first and a second end, in particular rivets, preferably blind rivets, is proposed wherein the device has a feed channel and at least one junction point connected to the feed channel. The junction point has a first channel and a second channel opposite it. The first or the second channel can preferably be connected to a pressure medium source, so a fastening element situated in the junction point can be removed from the junction point by the corresponding channel, depending on whether the pressure medium source is connected to the first or the second channel.

Preferably the device has a connecting channel connecting the feed channel to the junction point. In particular the connecting channel has a portion adjacent to the junction point, which is inclined downwards with respect to a horizontal line. This portion forms a kind of slide, on which a fastening element can slide into the junction point.

A movable ram is provided for selective and sequential transport of fastening elements from the feed channel to and into the junction point.

Further details and advantages of the invention are explained using the embodiment shown in the drawings.

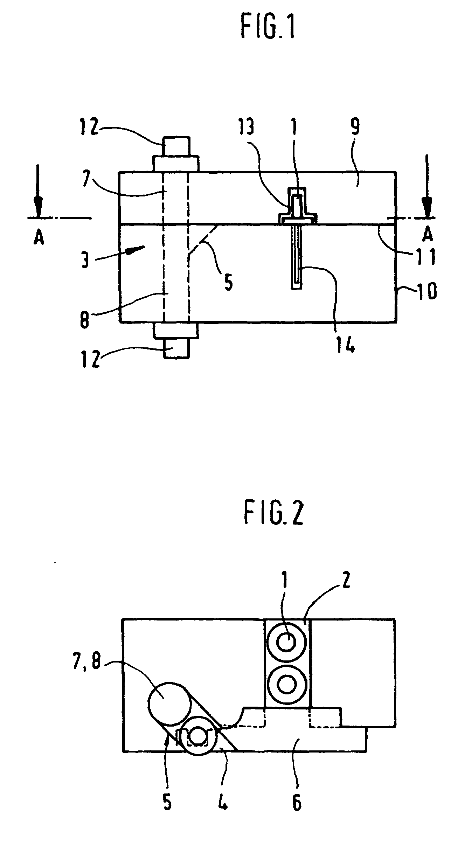

Figure 1 shows schematically a device that could be used for implementing the method of the invention in a front view.
Figure 2 shows the device of figure 1 in a sectional representation along the intersection line A-A.

The device that could be used for implementing the method of the invention comprises two basic bodies 9, 10, which are connected to one another. The basic bodies 9, 10 have a dividing plane 11. The device has a feed channel 2. The feed channel 2 is designed partially in basic body 9 and partially in basic body 10. The cross-sectional shape of the channel is adapted to the fastening element 1, which is supplied to the feed channel 2 via a conduit not shown.

In the embodiment shown the fastening element 1 is shown in the form of a blind rivet.

The basic body 9 and the basic body 10 have respectively a connecting branch 12, which can be connected in each case to a conduit, not shown. The conduit can lead to a fastening device, not shown, or to a pressure medium source. The branch 12 communicates with a first channel 7 or with a second channel 8, which form a junction point 3.

The junction point 3 is connected to the feed channel 2 via a connecting channel 4. The connecting channel 4 has a portion 5, which is inclined downwards with respect to a horizontal line. A ram is movably arranged inside the connecting channel 4. The ram is preferably movable between two end positions. In the one end position the ram 6 opens the feed channel 2, so a fastening element 1 can arrive in the connecting channel 4. By displacing the ram 6 in the direction of the junction point 3, the fastening element 1 is transported towards the junction point 3. When the fastening element 1 reaches the portion 5, which runs diagonally downwards, the fastening element 1 slides on this portion into the junction point 3. The ram 6 has reached its second end position. Preferably the ram 6 seals off the cross-section of the feed channel 2. Depending on whether the fastening element 1 is to be transported with its head 13 or with the mandrel 14 at the front, the first or the second channel 7 or 8 is impinged with a pressure medium, preferably with compressed air, so the fastening element is transported to a fastening device, not shown, either with the head at the front or the mandrel at the front. After the fastening element has been removed from the junction point 3 and the pressure medium supply has been stopped, the ram 6 is driven back into its first end position, so it opens the feed channel 2 again.

Movement of the ram 6 preferably occurs depending on a control, not shown, which is connected to a fastening device. Preferably the fastening device has sensor agents, by which is verified whether the fastening element has reached the fastening device. If this is the case the control is triggered via a signal, so the ram 6 is driven back into its first end position via an actuation device, not shown.

## Claims

1. Method for feeding fastening elements (1) with a first and a second end, in particular rivets, preferably blind rivets, in which at least one fastening element (1) is transported to a junction point (3) by a feed channel (2), the junction point (3) having a first channel (7) and a second channel (8) opposite it, **characterised in that** the at least one fastening element is transported to the junction point at a given orientation, and depending on whether the at least one fastening element is to be transported with its first end or with its second end at the front, the first or the second channel is impinged with a pressure medium and the at least one fastening element then leaves the junction point (3) with the first end in front via the first channel (7) or with the second end in front via the second channel (8).

2. Method according to Claim 1, **characterised in that** the fastening elements (1) are transported to the junction point (3) singly.

3. Method according to Claim 1 or 2, **characterised in that** following on from one fastening element (1), a further fastening element (1) is supplied to the junction point (3), when the previous fastening element (1) has left the junction point (3).

4. Method according to Claim 1, 2 or 3, **characterised in that** the fastening elements (1) are brought from the feed channel (2) to the junction point (3) in a connecting channel (4).

5. Method according to Claim 4, in **characterised in that** the fastening elements (1) slide into the junction point (3) on a portion (5) of the connecting channel (4) adjacent to the junction point (3).

6. Method according to one of claims 1 to 5, **characterised in that** the pressure medium is compressed air.

7. Method according to Claim 6, **characterised in that** at least the feed channel (2) is closed off at least during the pressure impingement.

8. Method according to one of claims 1 to 7, **characterised in that** a fastening element (1) is brought to the junction point (3) by a movable ram (6).

9. Method according to claim 7 or 8, **characterised in that** the ram (6) is moved between two end positions, wherein in a first end position it opens the feed channel (2) and in a second end position closes it off and seals it.

## Patentansprüche

1. Verfahren zum Zuführen von Befestigungselementen (1) mit einem ersten und einem zweiten Ende, insbesondere von Nieten, vorzugsweise von Blindnieten, bei dem wenigstens ein Befestigungselement (1) durch einen Zuführkanal (2) zu einer Weiche (3) transportiert wird, wobei die Weiche (3) einen ersten Kanal (7) und einen diesem entgegengesetzt gerichteten zweiten Kanal (8) aufweist, **dadurch gekennzeichnet, dass** das wenigstens eine Befestigungselement mit einer vorgegebenen Orientierung der Weiche zugeführt wird, und in Abhängigkeit davon, ob das wenigstens eine Befestigungselement mit seinem ersten Ende oder mit seinem zweiten Ende voran transportiert werden soll, der erste oder der zweite Kanal mit einem Druckmedium beaufschlagt wird, und das wenigstens eine Befestigungselement die Weiche (3) dann entweder mit dem ersten Ende voran über den ersten Kanal (7) oder mit dem zweiten Ende voran über den zweiten Kanal (8) verlässt.

2. Verfahren nach Anspruch 1, **dadurch gekennzeichnet, dass** die Befestigungselemente (1) vereinzelt zu der Weiche (3) transportiert werden.

3. Verfahren nach Anspruch 1 oder 2, **dadurch gekennzeichnet, dass** auf ein Befestigungselement (1) folgend ein weiteres Befestigungselement (1) zur Weiche (3) überführt wird, wenn das vorherige Befestigungselement (1) die Weiche (3) verlassen hat.

4. Verfahren nach Anspruch 1, 2 oder 3, **dadurch gekennzeichnet, dass** die Befestigungselemente (1) aus dem Zuführkanal (2) zur Weiche (3) in einem Verbindungskanal (4) geführt werden.

5. Verfahren nach Anspruch 4, **dadurch gekennzeichnet, dass** die Befestigungselemente (1) auf einem der Weiche (3) benachbarten Abschnitt (5) des Verbindungskanals (4) in die Weiche (3) hineinrutschen.

6. Verfahren nach einem der Ansprüche 1 bis 5, **dadurch gekennzeichnet, dass** das Druckmedium Druckluft ist.

7. Verfahren nach Anspruch 6, **dadurch gekennzeichnet, dass** wenigstens der Zuführkanal (2) wenigstens während der Druckbeaufschlagung abgeschlossen ist.

8. Verfahren nach einem der Ansprüche 1 bis 7, **dadurch gekennzeichnet, dass** ein Befestigungselement (1) durch einen beweglichen Stößel (6) zur Weiche (3) hin geführt wird.

9. Verfahren nach Anspruch 7 oder 8, **dadurch gekennzeichnet, dass** der Stößel (6) zwischen zwei Endstellungen bewegt wird, wobei er in einer ersten Endstellung den Zuführkanal (2) freigibt und in einer zweiten Endstellung diesen dichtend abschließt.

## Revendications

1. Procédé de distribution d'éléments de fixation (1) avec une première extrémité et une seconde extrémité, en particulier des rivets, de préférence des rivets aveugles, dans lequel au moins un élément de fixation (1) est transporté à un point de raccordement (3) par un canal d'alimentation (2), le point de raccordement (3) ayant un premier canal (7) et un second canal (8) opposé à celui-ci, **caractérisé en ce que** l'au moins un élément de fixation est transporté au point de raccordement avec une orientation donnée, et selon que l'au moins un élément de fixation doit être transporté avec sa première extrémité ou avec sa seconde extrémité devant, le premier ou second canal soumis à l'impact d'un milieu de pression et l'au moins un élément quitte alors le point de raccordement (3) avec la première extrémité devant via le premier canal (7) ou avec la seconde extrémité devant via le second canal (8).

2. Procédé selon la revendication 1, **caractérisé en ce que** les éléments de fixation (1) sont transportés un par un jusqu'au point de raccordement (3).

3. Procédé selon la revendication 1 ou 2, **caractérisé en ce que** suite au premier élément de fixation (1), un autre élément de fixation (1) est fourni au point de raccordement (3), lorsque le précédent élément de fixation (1) a quitté le point de raccordement (3).

4. Procédé selon la revendication 1, 2 ou 3, **caractérisé en ce que** les éléments de fixation (1) sont amenés du canal d'alimentation (2) au point de raccordement (3) dans un canal de raccordement (4).

5. Procédé selon la revendication 4, **caractérisé en ce que** les éléments de fixation (1) coulissent jusqu'au point de raccordement (3) sur une partie (5) du canal de raccordement (4) adjacent au point de raccordement (3).

6. Procédé selon l'une des revendications 1 à 5, **caractérisé en ce que** le milieu de pression est de l'air comprimé.

7. Procédé selon la revendication 6, **caractérisé en ce qu'**au moins le canal d'alimentation (2) est fermé au moins pendant l'impact de pression.

8. Procédé selon l'une des revendications 1 à 7, **caractérisé en ce qu'**un élément de fixation (1) est amené au point de raccordement (3) par un vérin mobile (6).

9. Procédé selon la revendication 7 ou 8, **caractérisé en ce que** le vérin (6) est déplacé entre deux positions d'extrémité, dans lequel dans une première position d'extrémité, il ouvre le canal d'alimentation (2) et dans une seconde position d'extrémité il le ferme et le rend étanche.
